(19)

Europäisches
Patentamt

European
Patent Office

Office européen
des brevets

(11) **EP 2 942 947 A2**

(12) # EUROPEAN PATENT APPLICATION

(43) Date of publication:
**11.11.2015 Bulletin 2015/46**

(51) Int Cl.:
***H04N 9/31*** *(2006.01)*

(21) Application number: **15167170.8**

(22) Date of filing: **11.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.05.2014 KR 20140055879**

(71) Applicant: **Samsung Electronics Co., Ltd Gyeonggi-do 443-742 (KR)**

(72) Inventors:
- **Wengierow, Michal**
  **443-742 Gyeonggi-do (KR)**
- **Jakubiak, Antoni**
  **443-742 Gyeonggi-do (KR)**

(74) Representative: **Nederlandsch Octrooibureau P.O. Box 29720 2502 LS The Hague (NL)**

(54) **Electronic device having projector and color correction method thereof**

(57)     An apparatus and a method are provided for correcting color in an electronic device. The method includes recognizing (820) a selection from a user of a color; determining (830) an operation mode of a projector that is projecting an image onto a screen, based on the selected color; determining (840) a current value for driving a light source of the projector, based on the determined operation mode; and controlling (860) the projector to apply a current corresponding to the determined current value.

FIG. 8

**Description**

**BACKGROUND OF THE INVENTION**

1. Field of the invention

The present invention relates generally to a method for correcting color of an image to be projected onto a screen and an electronic device for performing the method.

2. Description of the Related Art

Electronic devices, such as smart phones, tablet Personal Computers (PCs), etc., include or utilize a projector. Accordingly, the electronic device display an image on a display thereof, and project the same image onto a screen (e.g., white walls, or white boards) using the projector.

**SUMMARY OF THE INVENTION**

A projected image may be affected by external illumination (e.g., sunlight, or sunlight through colored curtains). This external illumination may cause errors in color distribution.

Further, even though the projector and the display have the same signal source, the projector cannot affect the image displayed through the display. Further, processing complexity increases if the electronic device is to provide different digital inputs to the projector and the display, respectively.

Basically, although the addition of a projector to an electronic device provides additional functionality to the electronic device, a number of problems are created with this additional functionality.

Problem 1. The features of Light Emitting Diodes (LEDs) of a Digital Light Processor (DLP) projector may differ for among series and sets of manufactured LEDs. That is, different sets and series of LEDs may have different operating features. Although these differences can be compensated for, if the compensation is performed with respect to each LED set during manufacturing, manufacturing the product will take too long.

In addition, the features of the LEDs (e.g., the dependency between the diode current and the emitted light) may not be accurately linear, but may vary over time. Accordingly, there is a problem of adjusting inner color (e.g., correcting a white temperature).

Problem 2. The screen color of the contents viewed by the user and the effect of external illumination.

The most typical and simplest method to solve this problem is to provide a user with ability to correct a color balance displayed on a screen. For example, the user may correct the color balance by moving a slider for each color. That is, an adaptive system is provided in which the projector is controlled by the user. However, this is a repeated process by which the user has to change a slider value in order to minimize a subjective mismatch of color. Further, this repeated process requires many manipulations and a lot of experience of the user.

Other technical solutions have also been provided, wherein, for example, a desired signal may be configured for a projector. Specifically, an additional camera or colorimeter measures a response directly emitted from the screen or the projector (in the case of the response from the projector, only problem 1 may be addressed). The input signal has a form of a predetermined pattern of a digital input with respect to the projector. The output is a digital color value obtained from the camera or the colorimeter. Thereafter, the dependency between the input and the output may be calculated. For example, the dependency calculation may be a function or a table, which is configured with respect to other colors and brightness (other RGB triplets).

An inverse function, which has the dependency between the input and the output may also be obtained. The inverse function may be applied to the input during the correction phase. Accordingly, each pixel value may be corrected by the obtained inverse function (or the table) before it is transferred to the projector. This method can solve the problem of non-uniform LED features (problem 1) and/or the problem of compensation of the screen color and the external illumination condition (problem 2). However, this method still has serious defects.

Specifically, in some cases, the features or the function (table) should be precompiled in the factory. Also, a change of a light condition cannot be compensated for.

Digital input values may be adjusted. The digital inputs refer to table values for each pixel. Accordingly, each pixel has an allotted value (RGB) in order to display points with desired colors on the screen. In this case, the color of each pixel is corrected according to the above-described inverse function. Accordingly, the color may be optimally corrected.

However, mobile electronic devices are likely to generate a single digital output for the display unit and the projector of the electronic device because of limited hardware of the mobile electronic device. As a result, changing the color of each pixel in order to correct the image displayed by the projector may cause incorrect color on the display unit of the mobile electronic device.

The present invention has been made to address at least the problems and/or disadvantages described above and to provide at least the advantages described below.

Accordingly, an aspect of the present invention is to provide a method and a device for automatic screen color compensation, thereby enhancing convenience of use of an electronic device including or utilizing a projector.

Another aspect of the present invention is to provide a method and a device for projecting an image onto a screen including a colored wall.

Another aspect of the present invention is to provide a method and a device for addressing the above-identified Problems 1 and 2 of a mobile electronic device, by changing a current of RGB LEDs, instead of changing a digital input value. The current of the RGB LEDs has a minimum limit and a maximum limit. Overall power output by the projector may be limited. This may be partially achieved by selecting a best duty mode, while a calculated current does not exceed the limit.

Another aspect of the present invention is to provide a method and a device that correct only white points, not an entire range of colors.

In accordance with an aspect of the present invention, a method is provided for correcting color in an electronic device. The method includes recognizing a selection from a user of a color; based on the selected color, determining an operation mode of a projector that is projecting an image onto a screen; based on the determined operation mode, determining a current value for driving a light source of the projector; and controlling the projector to apply a current corresponding to the determined current value to the light source.

In accordance with another aspect of the present invention, a method is provided for correcting color in an electronic device. The method includes activating a projector and a camera; receiving an image from the camera; calculating a sensitivity of the image; calculating a current value for driving a light source of the projector, based on the calculated sensitivity; and controlling the projector to apply a current corresponding to the calculated current value to the light source.

In accordance with another aspect of the present invention, an electronic device is provided, which includes an input device; a display that display an image; a projector that projects the image displayed on the display onto a screen; and a processor that executes a projecting management module that recognizes a selection of a user for color, determines an operation mode of the projector, based on the selected color, determines a current value for driving a light source of the projector, based on the determined operation mode, and controls the projector to apply a current corresponding to the determined current value to the light source.

In accordance with another aspect of the present invention, an electronic device is provided which includes a camera; a display that displays an image; a projector that projects the image displayed on the display onto a screen; a processor that executes a projecting management module that activates the projector and the camera, receives an image from the camera, calculates sensitivity of the image, calculates a current value for driving a light source of the projector, based on the calculated sensitivity, and controls the projector to apply a current corresponding to the calculated current value to the light source.

Various embodiments of the present invention may provide a method for correcting screen color of a projector. Various embodiments of the present invention may be applied to electronic devices, including a projector and a camera. The compensation may be performed with respect to mobile devices adopting a projector and a display which has general digital inputs. In this case, the color on the display of the device is not affected by the screen color compensation. Various embodiments of the present invention may be used for compensating the effect of external light as well as correcting the screen color. Various embodiments of the present invention may perform the compensation of the screen color by finding a set of duty cycles, which is most effective for compensation of the given screen color. Various embodiments of the present invention may be performed without information on LED features or pre-compensation.

## BRIEF DESCRIPTION OF THE DRAWINGS

The above and other aspects, features, and advantages of certain embodiments of the present invention will be more apparent from the following detailed description in conjunction with the accompanying drawings, in which:

FIG. 1 illustrates a network environment including an electronic device according to an embodiment of the present invention;
FIG. 2 illustrates a projecting management module of an electronic device according to an embodiment of the present invention;
FIG. 3 is a flowchart illustrating a method for correcting LED current values of a projector according to an embodiment of the present invention;
FIG. 4 is a flowchart illustrating a method for determining an operation mode of a projector according to an embodiment of the present invention;

FIG. 5 is a flowchart illustrating a method for determining an operation mode of a projector according to an embodiment of the present invention;

FIG. 6 is a flowchart illustrating a method for correcting screen color according to an embodiment of the present invention;

FIG. 7 illustrates an example of user interface information displayed by an electronic device according to an embodiment of the present invention;

FIG. 8 is a flowchart illustrating a method for manually adjusting screen color of an electronic device according to an embodiment of the present invention;

FIG. 9 illustrates an electronic device according to an embodiment of the present invention; and

FIG. 10 illustrates communication protocols between a plurality of electronic devices according to an embodiment of the present invention.

## DETAILED DESCRIPTION OF EMBODIMENTS OF THE INVENTION

Hereinafter, various embodiments of the present invention will be described with reference to the accompanying drawings. Although specific embodiments are illustrated in the drawings and related detailed descriptions are discussed in the present specification, the present invention may have various modifications and several embodiments. Further, the various embodiments of the present invention are not limited to a specific implementation form and it should be understood that the present invention includes all changes and/or equivalents and substitutes included in the spirit and scope of various embodiments of the present invention. In connection with descriptions of the drawings, similar components are designated by the same reference numeral.

Herein, the term "include" or "may include" which may be used in describing various embodiments of the present invention refers to the existence of a corresponding disclosed function, operation or component which can be used in various embodiments of the present invention and does not limit one or more additional functions, operations, or components. In various embodiments of the present invention, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present invention, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present invention may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present invention, a first structural element may be referred to as a second structural element. Similarly, the second structural element also may be referred to as the first structural element.

When a component is "coupled to" or "connected to" another component, the component may be directly coupled or connected to another component or a new component may exist between the component and another component. In contrast, when a component is "directly coupled to" or "directly connected to" another component, a new component does not exist between the component and another component.

The terms used in describing various embodiments of the present invention are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present invention may be a device including a projection function. For example, the electronic device may be one or a combination of a smart phone, a tablet PC, a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and electronic bracelet, an electronic necklace, an electronic appcessary, an electronic tattoo, and a smart watch.

Additionally, the electronic device may be a smart home appliance including a projection function. For example, the smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync®, Apple TV®, or Google TV®), game consoles, an electronic dictionary, an electronic key, a camcorder, and an electronic frame.

Further, the electronic device may include at least one of various types of medical devices (for example, Magnetic Resonance Angiography (MRA) device, Magnetic Resonance Imaging (MRI) device, Computed Tomography (CT) device, a scanner, an ultrasonic device, etc.), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass, etc.), an avionics device, a security device, a head unit for a vehicle, an industrial or home robot, an Automatic Teller Machine (ATM), and a Point Of Sale (POS) device of a shop.

The electronic device may also include at least one of a piece of furniture or a part of a building/structure, an electronic board, an electronic signature receiving device, a projector, and various types of measuring devices (for example, a water meter, an electricity meter, a gas meter, a radio wave meter, etc.) including a projection function.

Further, the electronic device according to various embodiments of the present disclosure may be a flexible device.

Additionally, the electronic device acc may be one or a combination of the above described various devices. It is apparent to those skilled in the art that the electronic device according to various embodiments of the present disclosure is not limited to the above described devices.

Herein, the term "user" may refer to a person who uses an electronic device or a device (for example, an artificial intelligence electronic device) that uses an electronic device.

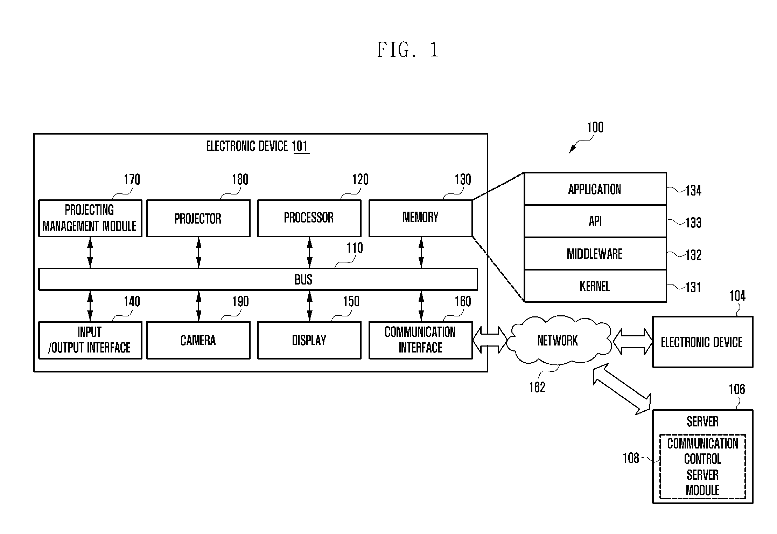

FIG. 1 illustrates a network environment including an electronic device according to an embodiment of the present invention.

Referring to FIG. 1, the electronic device 101 includes a bus 110, a processor 120, a memory 130, an input/output interface 140, a display 150, a communication interface 160, a projecting management module 170, a projector 180, and a camera 190.

The bus 110 may be a circuit connecting the above described components and transmitting communication (for example, a control message) between the above described components.

The processor 120 receives, through the bus 110, commands from the other components, i.e., the memory 130, the input/output interface 140, the display 150, the communication interface 160, the projecting management module 170, a projector 180, and a camera 190, analyzes the received commands, and executes calculation or data processing according to the analyzed commands.

The memory 130 stores commands or data received from the other components or generated by the other components. The memory 130 includes programming modules, i.e., a kernel 131, middleware 132, an Application Programming Interface (API) 133, and an application 134. Each of the aforementioned programming modules may be implemented by software, firmware, hardware, or a combination of two or more thereof.

The kernel 131 controls or manages system resources (for example, the bus 110, the processor 120, or the memory 130) used for executing an operation or function implemented by the other programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function for the API 133 or the application 134 to communicate with the kernel 131 to exchange data. Further, in operation requests received from the application 134, the middleware 132 performs a control for the operation requests (for example, scheduling or load balancing) by assigning, to the application 134, a priority, by which system resources of the electronic device 101 can be used.

The API 133 is an interface by which the application 134 can control a function provided by the kernel 131 or the middleware 132 and includes, for example, at least one interface or function (for example, command) for a file control, a window control, image processing, or a character control.

For example, the application 134 may include a Short Message Service (SMS)/Multimedia Messaging Service (MMS) application, an email application, a calendar application, an alarm application, a health care application (for example, application measuring quantity of exercise or blood sugar) or an environment information application (for example, application providing information on barometric pressure, humidity or temperature). Additionally or alternatively, the application 134 may be an application related to an information exchange between the electronic device 101 and an external electronic device (for example, electronic device 104). The application related to the information exchange may include, for example, a notification relay application for transferring particular information to the external electronic device or a device management application for managing the external electronic device.

For example, the notification relay application may include a function of transmitting notification information generated by another application (for example, an SMS/MMS application, an email application, a health care application or an environment information application) of the electronic device 101 to an external electronic device 104. Additionally or alternatively, the notification relay application may receive notification information from, for example, the external electronic device 104, and provide the received notification information to the user. The device management application may manage, e.g., install, remove, or update, at least a part of functions (for example, turning on/off the external electronic device 104 (or some components of the external electronic device 104) or controlling a brightness of the display) of the external electronic device 104 communicating with the electronic device 101, an application executed in the external electronic device 104, or a service (for example, call service or message service) provided by the external electronic device 104.

The application 134 may include an application designated according to an attribute, e.g., a type of the external electronic device 104. For example, when the external electronic device 104 is an MP3 player, the application 134 may include an application related to music reproduction. Similarly, when the external electronic device 104 is a mobile medical device, the application 134 may include an application related to health care.

The application 134 may also include at least one of an application designated to the electronic device 101 and an application received from a server 106 or the electronic device 104.

The input/output interface 140 transmits a command or data input from the user through an input/output device, e.g., a sensor, a keyboard, or a touch screen, to the other components through the bus 110. For example, the input/output interface 140 may provide data on a user's touch input through a touch screen to the processor 120. Further, the input/output interface 140 may output a command or data received from the processor 120, the memory 130, the communication interface 160, or the projecting management module 170 through the input/output device, e.g., a speaker or a display. For example, the input/output interface 140 may output voice data processed through the processor 120 to the user through the speaker.

The display 150 displays various pieces of information, such as multimedia data, text data, etc., for the user.

The display 150 may display a graphic user interface image for interaction between the user and the electronic device 101. For example, the graphic user interface image may include interface information to activate a function for correcting color of the image to be projected onto the screen. The interface information may include a button, a menu, an icon, etc.

The camera 190 photographs still images and moving images. Further, the camera 190 may capture an image projected by the projector 180 onto a screen.

According to an embodiment of the present invention, the camera 190 is used to obtain a dependency between a driving module input, e.g., a current value for driving the LED, and a chromatic response. The chromatic response may be, for example, a color response recorded by the camera 190. The color response may include a background such as a color screen, or the effect of an additional external light resource.

The projector 180 projects various information onto a screen. The projector 180 may include a light source, e.g., three LEDs - Red, Green, and Blue (RGB), a driver, e.g., an LED driver, for driving the light source based on the configured control values, e.g., a brightness value of R, G, and B, and the time of use of the light resource, which are configured by the projecting management module 170, and a video modulator. For example, the video modulator may include a DLP and a Digital Micro-mirror Device (DMD). The video modulator modulates RGB lights input from the light resource based on a video signal input from other elements (e.g., the projecting management module 170), to thereby output the same. The modulated lights may be projected onto the screen.

Each of the RGB LEDs may emit light periodically and sequentially.

Specifically, one cycle may be comprised of three periods. Each LED may emit the light during each period. A duty cycle is defined as a value gained by dividing the light emitting time of one LED by the total period of cycle. The color of the projected light may be determined by a selected operation mode and a ratio of on/off time of each mirror of the DMD.

An operation mode refers to, for example, a total amount of the light emitting periods of the LEDs. For example, in the case of 20:50:30, a red LED emits the light for a 20% of the period of one cycle, a green LED emits the light for a 50% of the period thereof, and a blue LED emits the light for a 30% of the period thereof, respectively. The ratio may directly correspond to digital input values (e.g., a brightness value of each of the RGB light resources) for each color, which are identical in the projector 180 and the display 150. The color and brightness of the projected light may be limited by a minimum/maximum current of the LED and the maximum power output of all the LEDs.

The projector 180 may project a uniform color image including a white and black pattern or a color pattern onto the screen.

The operation mode of the projector 180 may be selected, e.g., controlled by the projecting management module 170. The selection of the operation mode may provide an ability to compensate for the screen color or the external light in the range of the predetermined current value (i.e., a current for driving the LED in boundary conditions) and for the wide range beyond the limit, which results from the output power, i.e., the power corresponding to the light emitted from the projector 180.

The selection of the operation mode may be based on a dependency between a driving module input and a chromatic response, which are obtained by using the camera 190. Alternatively or additionally, the selection of the operation mode may be based on a scanning through all pre-configured operation modes of the projector 180.

The communication interface 160 connects communication between the electronic device 101 and the external electronic device 104 or the server 106. For example, the communication interface 160 may access a network 162 through wireless or wired communication to communicate with the external electronic device 104. For example, the wireless communication includes at least one of WiFi, BlueTooth® (BT), Near Field Communication (NFC), a Global Positioning System (GPS), and cellular communication, e.g., Long Term Evolution (LTE), LTE-Advanced (LTE-A), Code Division Multiple Access (CDMA), Wideband CDMA (WCDMA), Universal Mobile Telecommunications System (UMTS), WiBro or Global System for Mobile communications (GSM)). For example, the wired communication may include at least one of a Universal Serial Bus (USB), a High Definition Multimedia Interface (HDMI), Recommended Standard 232 (RS-232), and a Plain Old Telephone Service (POTS).

The network 162 may be a telecommunication network including at least one of a computer network, Internet, Internet of things, and a telephone network. A protocol for communication between the electronic device 101 and the external electronic device 104, e.g., transport layer protocol, data link layer protocol, or physical layer protocol, may be supported by at least one of the application 134, the application programming interface 133, the middleware 132, the kernel 131, and the communication interface 160.

The server 106 may support operations of the electronic device 101 by executing at least one of the operations (or functions) performed in the electronic device 101. For example, the server 106 may include a projecting management module 108 that supports the projecting management module 170 of the electronic device 101. For example, the projecting management module 108 may include at least one element of the projecting management module 170 and execute, e.g., act as a proxy, at least one of the operations performed by the projecting management module 170.

The projecting management module 170 can process at least part of contents acquired from the other elements, and provide the processed result to the user. For example, the projecting management module 170 may control at least some functions of the electronic device 101 in order to project the image onto the screen, using the processor 120, or independently.

The projecting management module 170 may process the captured image in order to obtain a dependency between a digital input value. e.g., the value of a ratio of on/off time of each mirror of the DMD, which is input to the projector 180, and a value captured by the camera 190.

Alternatively, at least one element of the projecting management module 170 may be included in the server 106, e.g., the projecting management module 108), and the server 106 may support at least one operation that is performed by the projecting management module 170.

The projecting management module 170 may compensate for the screen color without a pre-stored color temperature table, pre-stored reaction features, or pre-calibration of the driving module, e.g., the LED driver. As described above, the calibration requires a lot of time and cost because of the non-linear feature of the LED, a drift in time, and differences between specific devices. Accordingly, in order to overcome the above-identified problems, in accordance with an embodiment of the present invention, the projecting management module 170 uses a dependency between a driving module input and a chromatic response, which are obtained by using the camera 190.

For example, a shift of a white point may be generated due to the non-linearity. In order to minimize the shift of the white point, the projecting management module 170 may repeatedly control the projector 180 to project a white light, e.g., a digital input of R=255, G=255, B=255 input to the video modulator, control the camera 190 to capture the projected image, and correct an input value, e.g., current values for driving the R. G. B LEDs, of the projector 180 according to the input value from the camera 190.

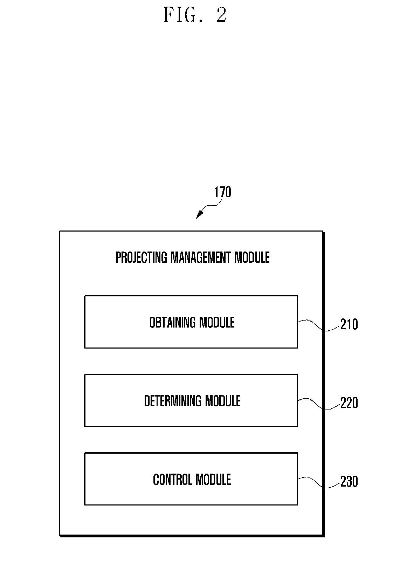

FIG. 2 illustrates a projecting management module 170 of an electronic device according to an embodiment of the present invention.

Referring to FIG. 2, the projecting management module 170 includes an obtaining module 210, a determining module 220, and a control module 230.

The obtaining module 210 obtains various pieces of information for the projecting management from other elements. For example, the obtaining module 210 may obtain a captured projected image from the camera 190. The determining module 220 calculates a color response, e.g., sensitivity, by using the captured projected image, and determines current values for driving a light source, e.g., three LEDs, (RGB), based on the color response.

In addition, the determining module 220 may determine the operation mode, e.g., a duty cycle, of the projector 180 based on the determined current values.

The control module 230 controls the projector 180, e.g., corrects the brightness of the light source, based on the determined current values. The control module 230 controls the projector 180 to operate in the determined operation mode.

In accordance with an embodiment of the present invention, a method for correcting a current value includes projecting an image onto a colored screen or a screen illuminated with an external light and preliminarily correcting the LED currents. The projecting conditions cause the shift of the white point of the image and an incorrect perception of image color.

As described above, a system includes the camera 190 and the projector 180 using three LEDs (RGB) as a light source. The projector 180 consecutively projects images, e.g., red, green, and blue, onto the colored screen. Additionally, the consecutive projection may include an operation of not projecting the light onto the colored screen. That is, the projector 180 may not project the light, and after a predetermined time, it may project a red light, a green light, and a blue light in sequence. The consecutive projection of the images may be replaced with an operation of projecting a corresponding color pattern (e.g., color strips).

The projected image is captured by the camera 190. Thereafter, the projecting management module 170 calculates mean digital outputs from each channel (RGB) with respect to each of captured images. The mean digital outputs are used for obtaining the driving currents of the LEDs. A white color may be gained based on the obtained currents. For example, the obtained currents are used for correcting color for eyes with respect to movie projection.

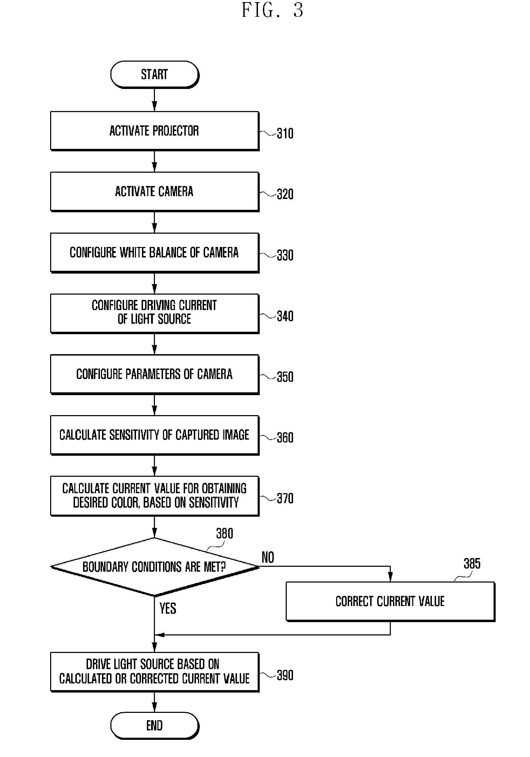

FIG. 3 is a flowchart illustrating a method for correcting LED current values of a projector according to an embodiment of the present invention.

Referring to FIG. 3, in step 310, the projector 180 is activated by the projecting management module 170 (e.g., the control module 230).

In step 320, the camera 190 is activated by the control module 230.

In step 330, the control module 230 configures the white balance of the camera 190. For example, the white balance similar to that in the theater environment may be in the range 5200 ~ 6000 K.

In step 340, the control module 230 configures the driving current values of the LEDs, e.g., selects the middle value in the predetermined range of the current value.

In step 350, the control module 230 configures parameters of the camera 190, e.g., a camera exposure time, a size of an aperture stop, and a digital gain. The configuration of the parameters is for obtaining the mean of color values, which is close to a desired value, output from the camera channels (red, green and blue). Here, the desired value may be a half of a camera bit range. For example, when the camera 190 supports 8 bits (256 colors), the mean of color values output from the red channel, the green channel, and the blue channel may be 128. The control module 230 may obtain the desired value by adjusting the camera exposure time.

Additionally, the control module 230 may adjust the size of the aperture stop, e.g., when the desired value is not obtained by adjusting the camera exposure time.

Additionally, the control module 230 may change the digital gain, e.g., change the digital gain for adjusting the brightness value of the captured image. The change of the digital gain may cause a shift of the white point of the camera 190 and affect the final result (the desired value).

In step 360, the projecting management module 170 calculates the sensitivity of the captured image.

In accordance with an embodiment of the present invention, step 360 may include Operations A and B as described below.

Operation A. The projecting management module 170 (e.g., the determining module 220) creates a transformation matrix showing non-orthogonal sensitivity of the camera 190. For example, the following transformation matrix may be created.

$$\begin{bmatrix} Y_{RR} & Y_{RG} & Y_{RB} & c_R \\ Y_{GR} & Y_{GG} & Y_{GB} & c_G \\ Y_{BR} & Y_{BG} & Y_{BB} & c_B \\ 0 & 0 & 0 & 1 \end{bmatrix}$$

The transformation matrix provides that each channel of the camera 190 is sensitive to the whole spectrum as well as the light in one color. For example, the red channel has a maximum sensitivity of about 620 nm, but is sensitive to the blue (450 nm) light and the green (550 nm) light as well. The coefficients refer to the dependency between the applied currents (not digital inputs, but as an example, the currents for driving the RGB LEDs) and a digital output on the camera. The dependency is constituted with the effect of LED features, camera features, screen color, and external lights. The dependency is assumed to be approximated and have a linear relation.

Operation B. The determining module 220 may interwork with the control module 230 to calculate the matrix coefficients.

B-1. Calculation of the first matrix coefficients: The control module 230 controls the projector 180 not to project the light. Alternatively, the user may draw the curtains on the screen (the state of curtain-on) where the image is projected. The control module 230 obtains the image, i.e., the screen image in a state of not emitting light or in a state of curtain-on, from the camera 190. The determining module 220 calculates the mean value of RGB channels from the obtained image.

Thereafter, the determining module 220 calculates constant coefficients, such as $c_R$, $c_G$, and $c_B$, as shown in Equation (1).

$$\begin{bmatrix} \gamma_{RR} & \gamma_{RG} & \gamma_{RB} & c_R \\ \gamma_{GR} & \gamma_{GG} & \gamma_{GB} & c_G \\ \gamma_{BR} & \gamma_{BG} & \gamma_{BB} & c_B \\ 0 & 0 & 0 & 1 \end{bmatrix} \begin{bmatrix} 0 \\ 0 \\ 0 \\ 1 \end{bmatrix} = \begin{bmatrix} R \\ G \\ B \\ 0 \end{bmatrix} \quad C_R=R, C_G=G, C_B=B \qquad \dots (1)$$

B-2. <u>Calculation of the second matrix coefficients</u>: The control module 230 controls the projector 180 to project the red light. The control module 230 obtains the image, i.e., the screen image in which the red light is projected, from the camera 190. The determining module 220 calculates the mean value of RGB channels from the obtained image.

Thereafter, the determining module 220 calculates red sensitivity coefficients, i.e., $C_R$, $C_G$, and $C_B$, as shown in Equation (2).

$$\begin{bmatrix} \gamma_{RR} & \gamma_{RG} & \gamma_{RB} & c_R \\ \gamma_{GR} & \gamma_{GG} & \gamma_{GB} & c_G \\ \gamma_{BR} & \gamma_{BG} & \gamma_{BB} & c_B \\ 0 & 0 & 0 & 1 \end{bmatrix} \begin{bmatrix} I_R \\ 0 \\ 0 \\ 1 \end{bmatrix} = \begin{bmatrix} R \\ G \\ B \\ 0 \end{bmatrix} \qquad \dots (2)$$

In Equation (2), $I_R$ denotes the current applied to the red LED, $\gamma_{GR}=(R-C_R)/I_R$, $\gamma_{GR}=(G-C_G)/I_R$, and $\gamma_{BR}=(B-C_B)/I_R$.

B-3. <u>Calculation of the third matrix coefficients</u>: The control module 230 controls the projector 180 to project the green light. The control module 230 obtains the image, i.e., the screen image in which the green light is projected, from the camera 190. The determining module 220 calculates the mean value of RGB channels from the obtained image.

Thereafter, the determining module 220 calculates green sensitivity coefficients, i.e., $C_R$, $C_G$, and $C_B$, as shown in Equation (3).

$$\begin{bmatrix} \gamma_{RR} & \gamma_{RG} & \gamma_{RB} & c_R \\ \gamma_{GR} & \gamma_{GG} & \gamma_{GB} & c_G \\ \gamma_{BR} & \gamma_{BG} & \gamma_{BB} & c_B \\ 0 & 0 & 0 & 1 \end{bmatrix} \begin{bmatrix} 0 \\ I_G \\ 0 \\ 1 \end{bmatrix} = \begin{bmatrix} R \\ G \\ B \\ 0 \end{bmatrix} \qquad \dots (3)$$

In Equation (3), $I_G$ denotes the current applied to the green LED, $\gamma_{RG}=(R-C_R)/I_G$, $\gamma_{GG}=(G-C_G)/I_G$, and $\gamma_{BG}=(B-C_B)/I_G$.

B-4. <u>Calculation of the fourth matrix coefficients</u>: The control module 230 controls the projector 180 to project the blue light. The control module 230 obtains the image, i.e., the screen image in which the blue light is projected, from the camera 190. The determining module 220 calculates the mean value of RGB channels from the obtained image.

Thereafter, the determining module 220 calculates blue sensitivity coefficients, i.e., $C_R$, $C_G$, and $C_B$, as shown in Equation (4).

$$\begin{bmatrix} \gamma_{RR} & \gamma_{RG} & \gamma_{RB} & c_R \\ \gamma_{GR} & \gamma_{GG} & \gamma_{GB} & c_G \\ \gamma_{BR} & \gamma_{BG} & \gamma_{BB} & c_B \\ 0 & 0 & 0 & 1 \end{bmatrix} \begin{bmatrix} 0 \\ 0 \\ I_B \\ 1 \end{bmatrix} = \begin{bmatrix} R \\ G \\ B \\ 0 \end{bmatrix} \qquad \dots (4)$$

In Equation (4), $I_B$ denotes the current applied to the blue LED, $\gamma_{RB}=(R-C_R)/I_B$, $\gamma_{GB}=(G-C_G)/I_B$, and $\gamma_{BB}=(B-C_B)/I_B$.

Referring again to FIG., 3, in step 370, the determining module 220 calculates current values to obtain a desired color, i.e., digital outputs $R_{mean}$, $G_{mean}$, and $B_{mean}$, as shown in Equation (5).

$$\begin{bmatrix} \gamma_{RR} & \gamma_{RG} & \gamma_{RB} & c_R \\ \gamma_{GR} & \gamma_{GG} & \gamma_{GB} & c_G \\ \gamma_{BR} & \gamma_{BG} & \gamma_{BB} & c_B \\ 0 & 0 & 0 & 1 \end{bmatrix}^{-1} \begin{bmatrix} R_{mean} \\ G_{mean} \\ B_{mean} \\ 1 \end{bmatrix} = \begin{bmatrix} I_{Rin} \\ I_{Gin} \\ I_{Bin} \\ 0 \end{bmatrix} \qquad \dots (5)$$

In Equation (5), the desired digital outputs $R_{mean}$, Gmean, and $B_{mean}$ are identical to the mean in step 350. $I_{Rin}$, $I_{Gin}$, and $I_{Bin}$ are driving current values for obtaining the desired digital outputs.

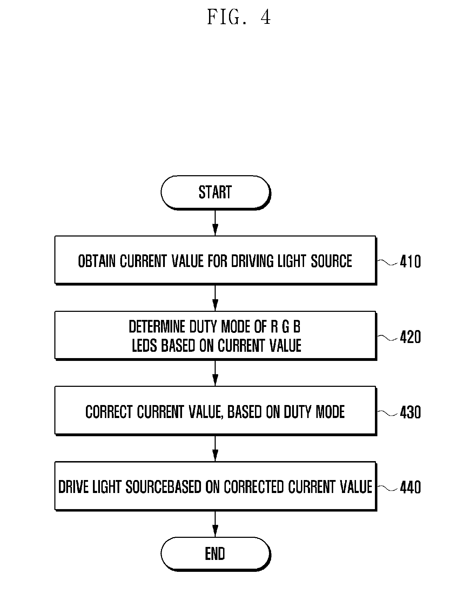

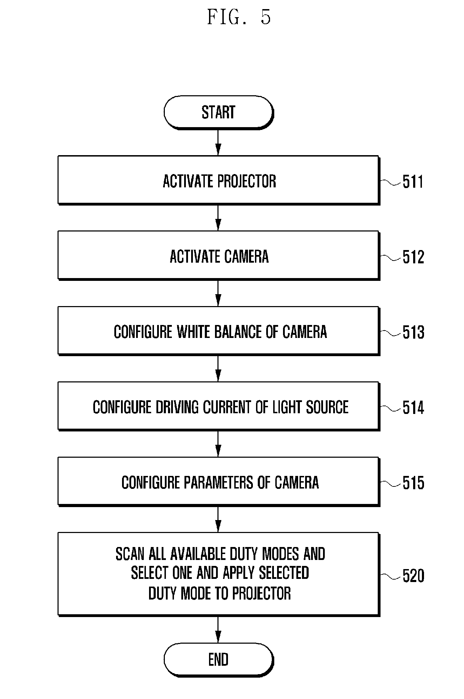

According to an embodiment of the present invention, when the driving current values are determined, the projecting management module 170 (e.g., the determining module 220) configures the operation mode of the projector 180. Additionally, the determining module 220 corrects the driving current values to correspond to a configured operation mode. The configuration of the operation mode will be described in detail with reference to the following FIGs. 4 and 5.

In step 380, the determining module 220 determines whether the calculated current values meet boundary conditions. For example, the determining module 220 may determine the boundary conditions for "the driving currents of the LEDs" and "the light power emitted from the projector 180".

If the calculated current values do not meet the boundary conditions, the determining module 220 corrects the driving current values to meet the boundary conditions in step 385. Thereafter, or if the calculated current values meet the boundary conditions in step 380, The control module 230 drives the light source, based on the calculated or corrected current values in step 390. That is, The control module 230 controls the projector 180 so that currents corresponding to the calculated or corrected current values are applied to the LEDs.

In step 385, the determining module 220 may correct the currents, based, at least in part, on the determined boundary conditions.

In accordance with an embodiment of the present invention, step 385 may include operations (a) to (f), as described below.

(a) the determining module 220 obtains power $P_R$, $P_G$, and $P_B$ for each channel (R, G, and B). For example, the determining module 220 calculates the light power emitted from each RGB LED. In addition, the determining module 220 calculates a ratio of normalization N, as shown in Equation (6).

$$N = I_R * P_R + I_G * P_G + I_B * P_B \qquad \dots (6)$$

In Equation (6), $P = I * V * D$, where I denotes a current, V denotes a voltage, and D denotes the duty cycle.

(b) The determining module 220 calculates a multiply ratio with respect to each current ($I_R$, $I_G$, and $I_B$). Here, each current ($I_R$, $I_G$, $I_B$) may be $I_{Rin}$, $I_{Gin}$, and $I_{Bin}$, respectively. The multiply ratio R = ($I_R * P_{max}$)/N, the multiply ratio G = ($I_G * P_{max}$)/N, and the multiply ratio B = ($I_B * P_{max}$)/N. $P_{max}$ is the maximum desired power output.

(c) The determining module 220 calculates new currents $I_R$ (=$I_R$*multiply ratio R), $I_G$ (=$I_G$*multiply ratio G), and $I_B$ (=IB*multiply ratio B).

(d) The determining module 220 checks a predetermined lower limit of the current. The projecting management module 170 determines whether the new currents are less than the lower limit. If the new currents are less than the lower limit, the determining module 220 scales the new currents to the lower limit.

For example, when $I_R < I_{lowerlimit\_R}$, the $I_R$ may be scaled to $I_{lowerlimit\_R}$. When $I_G < _{lowerlimit\_G}$, the $I_G$ may be scaled to $I_{lowerlimit\_G}$. When $I_B < _{lowerlimit\_B}$, the $I_B$ may be scaled to $I_{lowerlimit\_B}$. Here, the lower limit of each RGB may be the same value, or different values.

(e) When the new currents are scaled to the lower limit, the power increases. The increased power may exceed $P_{max}$. If the increased power does not exceed $P_{max}$, the lower limit is determined to be a current that is to be applied to the LEDs by the determining module 2200. If the increased power exceeds $P_{max}$, which could potentially damage the LED, the determining module 220 calculates the output power $P_{sum}$ of the LEDs, when the new currents (not corrected yet) are applied to the LEDs.

In addition, the determining module 220 obtains the actual output power $P_{act}$ of the LEDs, when the first corrected currents, i.e., the lower limit, are applied to the LED. The determining module 220 calculates the multiply ratio. Here, the multiply ratio is "1-($P_{act}$ - $P_{max}$)/$P_{sum}$".

The determining module 220 scales the first corrected currents into the second corrected currents, as shown in Equation (7).

$$\text{the second corrected currents} = \text{the new currents (not corrected yet)} * \text{multiply ratio}$$
$$\dots (7)$$

The determining module 220 determines whether the second corrected currents are greater than a predetermined upper limit. If the second corrected currents are greater than the upper limit, the determining module 220 scales the second corrected currents into the upper limit.

For example, when $I_R < I_{upperlimit\_R}$, the $I_R$ may be scaled to $I_{upperlimit\_R}$. When $I_G < I_{upperlimit\_G}$, the $I_G$ may be scaled to $I_{upperlimit\_G}$. When $I_B < I_{upperlimit\_B}$, the $I_B$ may be scaled to $I_{upperlimit\_B}$. Here, the upper limit of each RGB may be the same value, or different values.

If the second corrected currents are scaled to the upper limit, the upper limit is determined to be a current that is to be applied to the LEDs by the determining module 220, and the process proceeds to step 390.

If the second corrected currents are less than the upper limit, the second corrected currents are determined to be currents which are to be applied to the LEDs by the determining module 220, and the process proceeds to step 390.

(f) If the new currents are greater than the lower limit, the projecting management module 170 determines whether the new currents are greater than the upper limit. If the new currents are not greater than the upper limit, the new currents are determined to be currents which are to be applied to the LED by the determining module 220, and the process proceeds to step 390.

If the new currents are greater than the upper limit, the determining module 220 calculates the multiply ratio. Here, the multiply ratio is "$I_{upperlimit}/I_{maximum}$", where $I_{maximum}$ refers to the maximum current that can be applied to the LED.

The determining module 220 scales the new currents into the third corrected currents, as shown in Equation (8).

$$\text{the third corrected currents} = \text{the new current*multiply ratio} \qquad \ldots (8)$$

The third corrected currents are determined to be currents which are to be applied to the LEDs by the determining module 220.

In step 390, the control module 230 may operate the light source, based on the calculated or corrected current values. That is, the determining module 220 may control the projector 180 so that currents corresponding to the current values are applied to the LEDs.

According to the method illustrated in FIG. 3, the white point of the image to be projected onto the screen may be corrected by changing the LED currents within the boundary conditions, without changing the digital inputs, e.g., digital inputs to the video modulator, i.e., without changing the image to be projected onto the screen.

In addition, the method illustrated in FIG. 3 may be a base for an analytical approach to extend the color range. The above approach will be described in detail with reference to the following method for determining the operation mode of the projector.

A method for determining the operation mode of the projector according to various embodiments may deal with the limited current range and output power, while correcting color of the image to be projected onto the screen (e.g., while the method illustrated in FIG. 3 is performed by the electronic device 101). The system is comprised of a camera 190, and a projector 180 using three LEDs (RGB) as a light source. In the case of correcting unbalanced colors, at least one current may reach the boundary (e.g., $I_{lowerlimit}$, $I_{upperlimit}$). In addition, the output power of the LED may reach $P_{max}$. This restricts the possibility of color correction. In order to overcome the above problem, the operation mode of the projector 180 may be adjusted. For example, the duty cycle may be optimized to be a mode to overcome the above problem.

FIG. 4 is a flowchart illustrating a method for determining an operation mode of a projector according an embodiment of the present invention.

Referring to FIG. 4, in step 410, the projecting management module 170 obtains current values for driving the light source. For example, the projecting management module 170 may perform the above-described steps 310 to 380, as illustrated in FIG. 3, to obtain $I_{Rin}$, $I_{Gin}$, and $I_{Bin}$.

In step 420, the projecting management module 170 (e.g., the determining module 220) determines a duty mode of the RGB LEDs, based on the current values.

In accordance with an embodiment of the present invention, step 420 may include the following operations (a) to (d).

(a) The determining module 220 calculates the second current values $I_{RD}$, $I_{GD}$, and $I_{BD}$ to which a predetermined duty cycle is applied. Here, $I_{RD}=I_{Rin}*D_R$, $I_{GD}=I_{Gin}*D_G$, and $I_{BD}=I_{Bin}*D_B$. $D_R$, $D_G$ and $D_B$ are duty ratios from the actual duty mode (a group of duty cycles for RGB). Also, $D_R+D_G+D_B=X=1$.

(b) The determining module 220 normalizes a sum of the second current values into X (e.g., 1).

(c) The determining module 220 calculates an error function for available duty modes, for example, using Equation (9).

$$\text{error function} = (I_{normR}-D_{iR})^k + (I_{normG}-D_{iG})^k + (I_{normB}-D_{iB})^k \quad \ldots (9)$$

In Equation (9), $I_{normR}$, $I_{normG}$, and $I_{normB}$ are normalized second current values. For example, $I_{normR}=I_{RD}/(I_{RD}+I_{GD}+I_{BD})$. $D_{iR}$, $D_{iG}$, and $D_{iB}$ are duty ratios with respect to the analyzed duty mode i, and k is a power showing an error function.

(d) The determining module 220 selects duty modes ($D_{newR}$, $D_{newG}$, and $D_{newB}$) of which error function has a minimum value.

Referring again to FIG. 4, in step 430, the determining module 220 corrects the current values based on the duty modes. For example, the projecting management module 170 calculates new second current values $I_{Rin}$, $(=I_{RD}/D_{newR})$, $I_{Gin}(=I_{GD}/D^{newG})$, and $I_{Bin}(=I_{BD}/D_{newB})$.

In step 440, the determining module 220 controls the projector 180 to apply the new second current values to the LEDs.

Alternatively, the determining module 220 may perform step 390 as operation 440.

FIG. 5 is a flowchart illustrating a method for determining an operation mode of a projector according to an embodiment of the present invention.

Referring to FIG. 5, in steps 511 to 515, the projecting management module 170 (e.g., the control module 230) performs the same operations as steps 310 to 350 illustrated in FIG. 3 and described above.

In step 520, the determining module 220 scans all of the available duty modes to thereby select one of them, and then applies the selected duty mode to the operation of the projector 180.

In accordance with an embodiment of the present invention, step 520 may include operations (a) to (f), as shown below.

(a) The determining module 220 selects one of the duty modes, and applies the selected duty mode to the operation of the projector 180.

(b) The determining module 220 applies the selected duty mode to the operation of the projector 180, e.g., allows the red LED to emit the light for a 20% period of one cycle, the green LED to emit the light for a 50% period of one cycle, and the blue LED to emit the light for a 30% period of one cycle, and controls the projector 180 to project a white light onto the screen.

(c) The determining module 220 controls the camera 190 to capture the image.

(d) The determining module 220 calculates the mean of the RGB channels in the image obtained from the camera 190.

(e) The determining module 220 calculates an error function with respect to the applied duty mode by using the calculated mean. For example, the determining module 220 may calculate a sum of absolute deviations of the calculated mean.

(f) The determining module 220 repeats the processes (a) to (e), and applies the duty mode of which error function has a minimum value to the operation of the projector 180.

After step 520, the determining module 220 may additionally perform the same processes as illustrated in steps 380 to 390 of FIG. 3 and described above.

A method for correcting the screen color according to various embodiments deals with the processes by which a projector having non-linear features of the LEDs (the features may be different from LEDs, and drift with time) projects the image onto the screen. A method for correcting the screen color according to various embodiments may use the method for correcting the LED current values (e.g., the method illustrated in FIG. 3) in order to reduce the correction time and select the optimal operation mode (the duty cycle). For example, the method illustrated in FIG. 3 may be used for finding a starting point (e.g., a point close to the desired white point). The system is comprised of a camera 190, and a project 180 using three LEDs for a light source.

A method for correcting the screen color according to various embodiments includes operations of projecting the white light onto the screen through the projector 180, capturing the image projected onto the screen by the camera 190, calculating mean digital outputs of three channels (RGB), and adjusting the LED driving currents in order to reduce the difference between the mean outputs. The above operations are repeated until the difference between the mean outputs is equal to or greater than a predetermined value. This method may be used for correcting the obtained currents (e.g., the currents obtained by the method of FIG. 3). This method may be used independently from the method illustrated in FIG. 3.

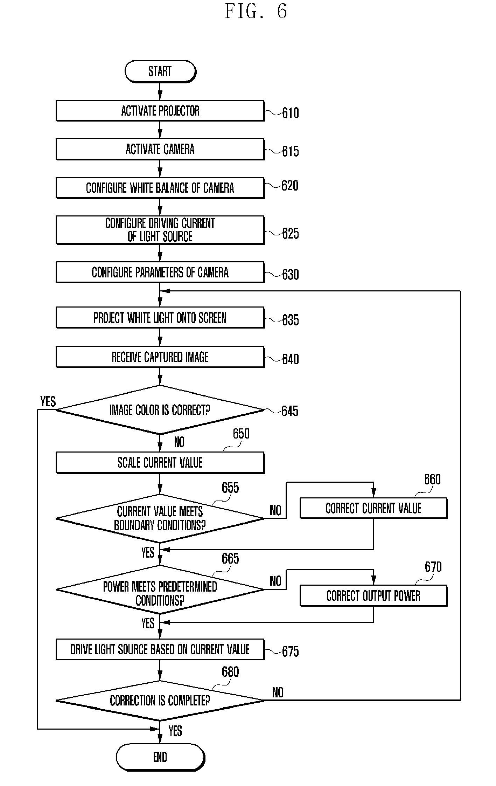

FIG. 6 is a flowchart illustrating a method for correcting screen color according to an embodiment of the present invention.

Referring to FIG. 6, in step 610, the projector 180 is activated by the projecting management module 170 (e.g., the control module 230).

In step 615, the camera 190 is activated by the control module 230.

In step 620, the control module 230 configures the white balance of the camera 190.

In step 625, the control module 230 configures the current values for driving the LEDs. For example, the control module 230 configures the middle value in the range of predetermined current values.

In step 630, the control module 230 configures parameters of the camera 190. For example, step 630 may be the same as step 350 illustrated in FIG. 2 and described above.

Although not illustrated in FIG. 6, after step 630, the projecting management module 170 may correct the current values for driving the LEDs. Additionally, the projecting management module 170 may determine the operation mode of the projector 180.

In step 635, the control module 230 controls the projector 180 to project a white light onto the screen.

In step 640, the control module 230 receives the captured image from the camera 190.

In step 645, the determining module 220 determines whether the color of the image projected onto the screen is correct, by using the received image. In the case of an incorrect color, the determining module 220 may perform the next step (e.g., step 650).

In accordance with an embodiment of the present invention, in step 645, the determining module 220 calculates mean digital outputs "meanR", "meanG", and "meanB" from each channel (R, G, and B, calculates the mean "mean {(=meanR + meanG + meanB)/3}", calculates errors "rError" {= (mean-meanR)/mean}, "gError" {=(mean-meanG)/mean}, and "bError" {= (mean-meanB)/mean} corresponding to each channel, and compares the errors with corresponding predetermined values to thereby determine the accuracy thereof. For example, if all the errors are less than the corresponding predetermined values, the process may terminate. However, if all the errors are greater than the corresponding predetermined values, the process proceeds to step 650. Here, the predetermined values may be different with respect to each error, or the predetermined values may be identical to each other.

In the case of an incorrect color in step 645, the determining module 220 scales the current values, e.g., as shown in Equation (10).

$$I_R = I_R(1 + mean * rError * CorrectStep / meanR)$$

$$I_G = I_G(1 + mean * gError * CorrectStep / meanG)$$

$$I_B = I_B(1 + mean * bError * CorrectStep / meanB) \quad \dots (10)$$

In Equation (10), the "CorrectStep" is a fraction of the error that is to be corrected.

In step 655, the determining module 220 determines whether the current values $I_R$, $I_G$, and $I_B$ meet the boundary conditions. If the current values do not meet the boundary conditions in step 655, the determining module 220 corrects the current values $I_R$, $I_G$, and $I_B$ in step 660. If the current values meet the boundary conditions, the determinging module 220 may perform the next step (e.g., step 665).

According to an embodiment of the present invention, in step 660, the determining module 220 configures all flags to be false values. Here, each flag may be a Boolean value for each channel (RGB). If a certain current among the RGB driving currents is not the predetermined boundary conditions (the lower limit and the upper limit), the determining module 220 scales the corresponding current to the upper limit or the lower limit. For example, if the current is greater than the upper limit, the current may be scaled to the upper limit. If the current is less than the lower limit, the current may be scaled to the lower limit. After the current is changed, the determining module 220 configures the corresponding flag to be a true value.

When all the RGB driving currents meet the boundary conditions, the determining module 220 compares an error of a specific channel (e.g., obtained in step 645) with a predetermined value, and determines the value of the corresponding flag, based on the comparison result. For example, when rError < maxError, the determining module 220 configures "FlagR" corresponding to the channel R to be a true value.

If the current values meet the boundary conditions in step 655, the determining module 220 determines whether the output power meets predetermined conditions in step 665.

If the output power does not meet the predetermined conditions in step 665, the determining module 220 corrects the output power in step 670. If the output power meets the predetermined conditions, the determining module 220 may perform the next operation (e.g., step 675).

In accordance with an embodiment of the present invention, step 670 includes processes (a) to (c), as shown below.

(a) The determining module 220 calculates the output power Pact of the LEDs. The determining module 220 checks whether Pact exceeds the maximum allowable value $P_{max}$. If Pact does not exceed the maximum allowable value $P_{max}$, the process (b) may be omitted.

(b) If Pact exceeds the maximum allowable value $P_{max}$, the determining module 220 calculates the multiply ratio A (=$P_{max}/P_{act}$). The determining module 220 checks whether the currents $I_R$, $I_G$ and $I_B$ that are multiplied by A exceed an upper limit (e.g., a maximum allowable current). If they do not exceed the upper limit, the projecting management module 170 multiplies currents $I_R$, $I_G$, and $I_B$ by A.

(c) The projecting management module 170 checks whether the actual power is greater than the desired value. If the actual power is greater than the desired value, the process proceeds to step 675. However, if the actual power is less than the desired value, the determining module 220 checks color errors. If the color errors are positive, the determining module 220 configures the corresponding flag to be a true value.

If the color errors are negative and the currents are greater than the lower limit, the determining module 220 configures the corresponding flag to be a false value. The determining module 220 calculates $P_{sum}$ by using the currents $I_R$, $I_G$, and $I_B$, which are greater than the lower limit.

The determining module 220 calculates the difference value of power $P_{diff}$ ($P_{act}$ - $P_{max}$), calculates the multiply ratio B {=1-($P_{diff}/P_{sum}$)}, and multiplies currents $I_R$, $I_G$, and $I_B$ by B. If any one of the currents $I_R$, $I_G$, and $I_B$ is less than the lower limit, the determining module 220 corrects the corresponding current value to the lower limit.

If the output power meets the predetermined conditions in step 665, the determining module 220 controls the projector 180 to apply the current determined as a result of the above operations to the LEDs in step 675.

In step 680, the determining module 220 determines whether the correction is completed. For example, if all the flags are true values, the process terminates. Otherwise, the process may return to step 635.

According to specific embodiments, the projector 180 and the camera 190 may be provided separately from each other. If the brightness of the light source or the use period of the light source is controllable, another type of projector, other than a DLP may be used.

The above-described methods may be implemented by using other factors (depending on the technology of projector) that can control the amount of light emitted from the light source as well as the duty cycle. For example, LEDs, laser beams, incandescent color lamps, and OLEDs may be used for the light source. The described embodiments may be used for obtaining specific color, for example, a green screen, as well as the white point.

A method and a device according to various embodiments of the present invention may be used for improving the efficiency of manual screen color compensation. The manual screen color compensation will be described in detail with reference to the following drawings.

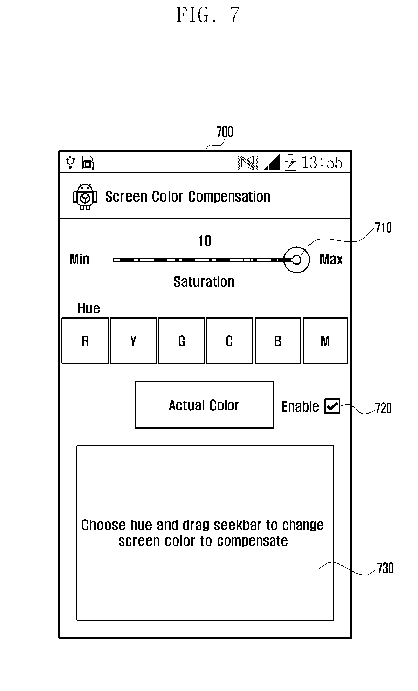

FIG. 7 illustrates an example of user interface information displayed by an electronic device according to an embodiment of the present invention.

Referring to FIG. 7, the projector 180 may use RGB LEDs as the light source. The display 150 displays user interface information 700 for manual screen color compensation. The identical view may be projected onto a screen by the projector 180. The user may select a color (actual color in the UI) similar to the screen color to be compensated, through the user interface information 700. The selection of color may be made in various ways, e.g., a Hue Saturation Value (HSV) color space. The user may select, e.g., touch any one of displayed Red (R), Yellow (Y), Green (G), Cyan (C), Blue (B), and Magenta (M), any one of hue values, e.g., R=0, Y=60, G=120, C=180, B=240, and M=300. In addition, the user may set, e.g., drag a selection button 710, the saturation. Here, the saturation scale may be in the range of 0 (min) to 10 (max).

For example, a white box 730 looks white through the display 150, but it may look green on the projection screen. The electronic device 101 may correct the screen color by a user's request, e.g., when the user touches "G" and then ticks the checkbox 720. The user may observe the white box 730 projected onto the screen, and check accurate compensation. If the white box 730 looks white through the screen, it means that the compensation is properly made.

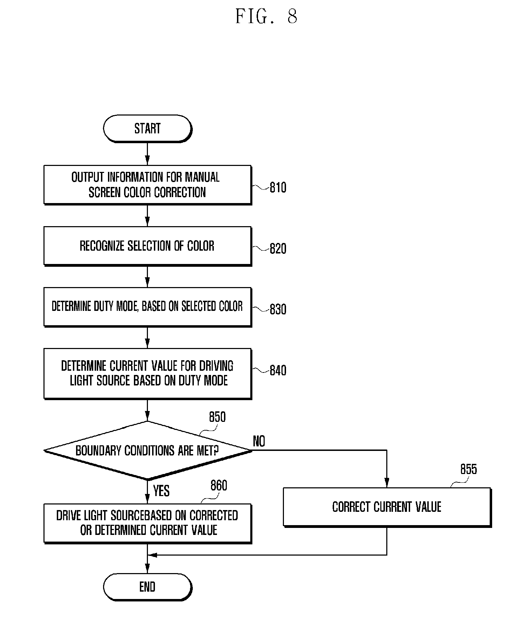

FIG. 8 is a flowchart illustrating a method for manually compensating screen color of an electronic device according to an embodiment of the present invention.

Referring to FIG. 8, in step 810, the projecting management module 170 (e.g., the control module 230) outputs information for the manual screen color compensation through a display. For example, the control module 230 controls the display 150 to display the user interface information 700. Alternatively or additionally, the projecting management module 170 may control the projector 180 to project the user interface information 700 onto the screen.

In step 820, the control module 230 recognizes the selection of color through an input device, e.g., the touch screen. Alternatively, the projecting management module 170 (e.g., the determining module 220) may transform the selected color, such as from HSV color, e.g., "G" as illustrated in FIG. 7, into RGB color.

In step 830, the determining module 220 determines the duty mode, based on the selected (or transformed) color.

In accordance with an embodiment of the present invention, step 830 includes operations (a) to (d), as shown below.

(a) The determining module 220 calculates the reverse color as shown in Equation (11).

$$newR = 255 - R, \ newG = 255 - G, \ newB = 255 - B \qquad \ldots (11)$$

(b) The determining module 220 normalizes "newR", "newG" and "newB" into X=1 as shown in Equation (12).

$$R_{norm}=newR/(newR+newG+newB)$$

$$G_{norm}=newG/(newR+newG+newB)$$

$$B_{norm}=newB/(newR+newG+newB) \qquad \ldots (12)$$

(c) The determining module 220 calculates an error function with respect to each duty mode as shown in Equation (13).

$$error = (R_{norm}-D_{iR})^k+(G_{norm}-D_{iG})^k+(B_{norm}-D_{iB})^k \ \ldots (13)$$

In Equation (13), $D_{iR}$, $D_{iG}$, and $D_{iB}$ are duty ratios for the duty mode i, and "k" is a power showing the error function.

(d) The determining module 220 selects duty modes of which an error function has a minimum value among the duty modes.

In step 840, the determining module 220 determines the current values for driving the light source, based on the determined duty mode. That is, the determining module 220 scales the current values of "newR", "newG", and "newB" to the corresponding current values of the selected duty mode.

In accordance with an embodiment of the present invention, step 840 includes operations (a) to (d) as described below.

(a) The determining module 220 checks a channel that has maximum output power among the RGB channels.
(b) On an assumption that other channels use a minimum allowable current, the determining module 220 identifies a predetermined maximum current (CurrentPowLim) for the channel identified in (a).
(c) The determining module 220 calculates currents as shown in Equation (14).

$$I_R=BaseCurrent*(1/D_R)*(newR/255)+lowerLimit*(D_{max}/D_R)$$

$$I_G=BaseCurrent*(1/D_G)*(newG/255)+lowerLimit*(D_{max}/D_G)$$

$$I_B=BaseCurrent*(1/D_B)*(newR/255)+lowerLimit*(D_{max}/D_B) \qquad \ldots (14)$$

In Equation (14), "BaseCurrent" is "CurrentPowLim - lowerLimit", and "lowerLimit" is the minimum allowable current for each channel. Also, $D_{max}$ is maximum $(D_R,D_G,D_G)$.

(d) Additionally, the determining module 220 may scale $I_R$, $I_G$, and $I_B$ to be uniform in order to gain maximum allowable output power.

In step 850, the determining module 220 determines whether the current values $I_R$, $I_G$, and $I_B$ meet the boundary conditions. If the current values do not meet the boundary conditions (the lower limit and the upper limit), the determining module 220 corrects the current values $I_R$, $I_G$, and $I_B$ to meet the boundary conditions in step 855. After the correction in step 855 or if the current values meet the boundary conditions in step 850, the control module 230 operates the light source, based on the determined or corrected current values in step 860.

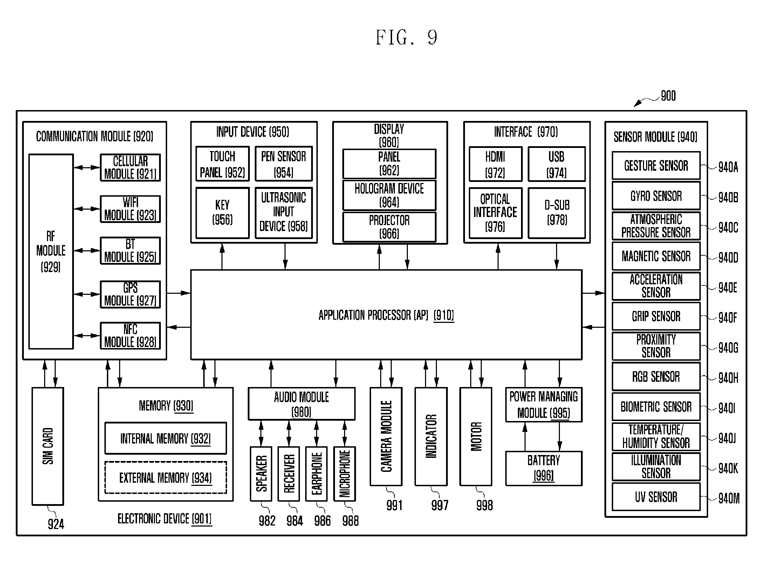

FIG. 9 illustrates an electronic device according to an embodiment of the present invention. Specifically, the electronic device 901 may configure, for example, a whole or a part of the electronic device 101 illustrated in FIG. 1.

Referring to FIG. 9, the electronic device 901 includes one or more Application Processors (APs) 910, a communication module 920, a Subscriber Identification Module (SIM) card 924, a memory 930, a sensor module 940, an input device 950, a display 960, an interface 970, an audio module 980, a camera module 991, a power managing module 995, a battery 996, an indicator 997, and a motor 998.

The AP 910 operates an operating system (OS) or an application program to control a plurality of hardware or software component elements connected to the AP 910 and execute various data processing and calculations including multimedia data. The AP 910 may be implemented by, for example, a System on Chip (SoC). Although not illustrated, the processor 910 may further include a Graphic Processing Unit (GPU) and/or the projecting management module 170.

The communication module 920 transmits/receives data between different electronic devices connected to the electronic device 901 (for example, the electronic device 104 and the server 106, as illustrated in FIG. 1) through a network. The communication module 920 includes a cellular module 921, a WiFi module 923, a BT module 925, a GPS module 927, an NFC module 928, and a Radio Frequency (RF) module 929.

The cellular module 921 provides a voice, a call, a video call, an SMS, or an Internet service through a communication network, e.g., LTE, LTE-A, CDMA, WCDMA, UMTS, WiBro, GSM, etc. Further, the cellular module 921 may distinguish and authenticate electronic devices within a communication network by using a subscriber identification module (for example, the SIM card 924).

According to an embodiment of the present invention, the cellular module 921 may perform at least some of the functions that can be provided by the AP 910. For example, the cellular module 921 may perform at least some of the multimedia control functions.

Although not illustrated, the cellular module 921 may include a Communication Processor (CP). Further, the cellular module 921 may be implemented by, for example, an SoC. Although the components such as the cellular module 921, the memory 930, and the power managing module 995 are illustrated as components separate from the AP 910 in FIG. 9, the AP 910 may include at least some (for example, cellular module 921) of the aforementioned components in an embodiment.

The AP 910 or the cellular module 921 may load a command or data received from at least one of a non-volatile memory and other components connected to each of the AP 910 and the cellular module 921 to a volatile memory and process the loaded command or data. Further, the AP 910 or the cellular module 921 may store data received from at least one of other components or generated by at least one of other components in a non-volatile memory.

Each of the WiFi module 923, the BT module 925, the GPS module 927, and the NFC module 928 may include, for example, a processor for processing data transmitted/received through the corresponding module. Although the cellular module 921, the WiFi module 923, the BT module 925, the GPS module 927, and the NFC module 928 are illustrated as being separate from each other in FIG. 9, at least some of the cellular module 921, the WiFi module 923, the BT module 925, the GPS module 927, and the NFC module 928 may be included in an Integrated Chip (IC) or an IC package. For example, at least some of the processors corresponding to the cellular module 921, the WiFi module 923, the BT module 925, the GPS module 927, and the NFC module 928 may be implemented by one SoC.

The RF module 929 transmits/receives data, for example, an RF signal. Although not illustrated, the RF module 929 may include, for example, a transceiver, a Power Amp Module (PAM), a frequency filter, a Low Noise Amplifier (LNA), etc. Further, the RF module 929 may further include a component for transmitting/receiving electronic waves over a free air space in wireless communication, for example, a conductor, a conducting wire, or the like. Although the cellular module 921, the WiFi module 923, the BT module 925, the GPS module 927, and the NFC module 928 share the RF module 929 in FIG. 9, alternatively, at least one of the cellular module 921, the WiFi module 923, the BT module 925, the GPS module 927, and the NFC module 928 may transmit/receive an RF signal through a separate RF module.

The SIM card 924 includes unique identification information or subscriber information.

The memory 930 includes an internal memory 932 and an external memory 934. For example, the internal memory 932 may include at least one of a volatile memory (for example, a Random Access Memory (RAM), a dynamic RAM (DRAM), a static RAM (SRAM), a synchronous dynamic RAM (SDRAM), etc.), and a non-volatile Memory (for example, a Read Only Memory (ROM), a one time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, etc.).

The internal memory 232 may be a Solid State Drive (SSD).

The external memory 934 may further include a flash drive, for example, a Compact Flash (CF), a Secure Digital (SD), a Micro Secure Digital (Micro-SD), a Mini Secure Digital (Mini-SD), an extreme Digital (xD), or a memory stick. The external memory 934 may be functionally connected to the electronic device 901 through various interfaces.

Although not illustrated in FIG. 9, the electronic device 901 may further include a storage device (or storage medium) such as a hard drive.

The sensor module 940 measures a physical quantity or detects an operation state of the electronic device 901, and converts the measured or detected information to an electronic signal. The sensor module 940 includes a gesture sensor 940A, a gyro sensor 940B, an atmospheric pressure (barometric) sensor 940C, a magnetic sensor 940D, an acceleration sensor 940E, a grip sensor 940F, a proximity sensor 940G, a color sensor 940H (for example, Red, Green, and Blue (RGB) sensor) 940H, a biometric sensor 940I, a temperature/humidity sensor 940J, an illumination (light) sensor 940K, and a Ultra Violet (UV) sensor 940M. Additionally or alternatively, the sensor module 940 may include, for example, an E-nose sensor, an electromyography (EMG) sensor, an electroencephalogram (EEG) sensor, an electrocardiogram (ECG) sensor, an InfraRed (IR) sensor, an iris sensor, a fingerprint sensor, etc. The sensor module 940 may further include a control circuit for controlling one or more sensors included in the sensor module 940.

The input device 950 includes a touch panel 952, a pen sensor 954, a key 956, and an ultrasonic input device 958. For example, the touch panel 952 may recognize a touch input in at least one type of a capacitive type, a resistive type, an infrared type, and an acoustic wave type. The touch panel 952 may further include a control circuit. In the capacitive type, the touch panel 952 can recognize proximity as well as a direct touch. The touch panel 952 may further include a tactile layer. In this event, the touch panel 952 provides a tactile reaction to the user.

The pen sensor 954 may be implemented, for example, using a method identical or similar to a method of receiving a touch input of the user, or using a separate recognition sheet.

The key 956 may include, for example, a physical button, an optical key, or a key pad.

The ultrasonic input device 958 can detect an acoustic wave by a microphone (for example, microphone 988) of the electronic device 901 through an input means generating an ultrasonic signal to identify data and can perform wireless recognition.

According to an embodiment of the present invention, the electronic device 901 receives a user input from an external device (for example, computer or server) connected to the electronic device 901 by using the communication module 920.

The display 960 includes a panel 962, a hologram device 964, and a projector 966. The panel 962 may be, for example, a Liquid Crystal Display (LCD) or an Active Matrix Organic Light Emitting Diode (AM-OLED). The panel 962 may be implemented to be, for example, flexible, transparent, or wearable. The panel 962 may be configured by the touch panel 952 and one module.

The hologram device 964 shows a stereoscopic image in the air by using interference of light.

The projector 966 projects light on a screen to display an image. For example, the screen may be located inside or outside the electronic device 901.

Although not illustrated in FIG. 9, the display 960 may further include a control circuit for controlling the panel 962, the hologram device 964, and the projector 966.

The interface 970 includes, for example, a High-Definition Multimedia Interface (HDMI) 972, a Universal Serial Bus (USB) 974, an optical interface 976, and a D-subminiature (D-sub) 978. The interface 970 may be included in, for example, the communication interface 160 illustrated in FIG. 1. Additionally or alternatively, the interface 990 may include, for example, a Mobile High-definition Link (MHL) interface, a Secure Digital (SD) card/Multi-Media Card (MMC), or an Infrared Data Association (IrDA) standard interface.

The audio module 980 bi-directionally converts a sound and an electronic signal. At least some components of the audio module 980 may be included in, for example, the input/output interface 140 as illustrated in FIG. 1. The audio module 980 processes sound information input or output through, for example, a speaker 982, a receiver 984, an earphone 986, the microphone 988, etc.

The camera module 991 photographs a still image and a video. Although not illustrated in FIG. 9, the camera module 991 may include one or more image sensors, e.g., a front sensor or a back sensor, an Image Signal Processor (ISP), or a flash, e.g., an LED or xenon lamp.

The power managing module 995 manages power of the electronic device 901. Although not illustrated, the power managing module 995 may include, for example, a Power Management Integrated Circuit (PMIC), a charger Integrated Circuit (IC), or a battery or fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier, etc., may be added.

The battery fuel gauge measures, for example, a remaining quantity of the battery 996, or a voltage, a current, or a temperature during charging. The battery 996 may store or generate electricity and supply power to the electronic device 901 by using the stored or generated electricity. The battery 996 may include a rechargeable battery or a solar battery.

The indicator 997 shows particular statuses of the electronic device 901 or a part (for example, AP 910) of the electronic device 901, for example, a booting status, a message status, a charging status, etc.

The motor 998 converts an electrical signal to a mechanical vibration.

Although not illustrated, the electronic device 901 may include a processing unit (for example, GPU) for supporting a mobile TV. The processing unit for supporting the mobile TV may process, for example, media data according to a standard of Digital Multimedia Broadcasting (DMB), Digital Video Broadcasting (DVB), media flow or the like.

Each of the components of the electronic device according to various embodiments of the present invention may be implemented by one or more components and the name of the corresponding component may vary depending on a type of the electronic device. The electronic device according to various embodiments of the present invention may include at least one of the above described components, a few of the components may be omitted, or additional components may be further included. Also, some of the components of the electronic device according to various embodiments of the present invention may be combined to form a single entity, and thus, may equivalently execute functions of the corresponding components before being combined.

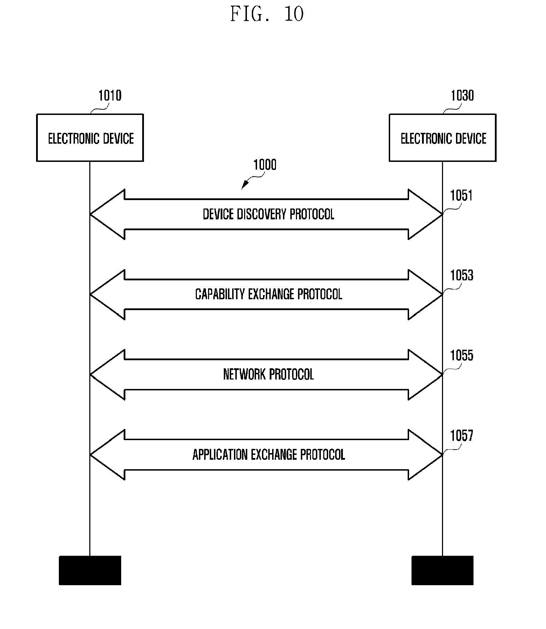

FIG. 10 illustrates communication protocols between a plurality of electronic devices according to an embodiment of the present invention.

Referring to FIG. 10, the communication protocols 1000 include a device discovery protocol 1051, a capability exchange protocol 1053, a network protocol 1055, and an application protocol 1057.

The electronic devices use the device discovery protocol 1051 to detect external devices capable of communicating with the electronic devices, or connect with the detected external electronic devices. For example, the electronic device 1010 may detect the electronic device 1030 as an electronic device capable of communicating with the electronic device 1010 through communication methods that are available in the electronic device 1010, e.g., WiFi, BT, USB, etc., by using the device discovery protocol 1051.

In order to connect with the electronic device 1030 for communication, the electronic device 1010 may obtain and store identification information on the detected electronic device 1030, by using the device discovery protocol 1051. The electronic device 1010 may initiate the communication connection with the electronic device 1030, for example, based on at least the identification information.

The device discovery protocol 1051 is used for authentication between a plurality of electronic devices. For example, the electronic device 1010 may perform authentication between the electronic device 1010 and the electronic device 1030, based on at least communication information, e.g., Media Access Control (MAC), Universally Unique Identifier (UUID), Subsystem Identification (SSID), Internet Protocol (IP) address, for connection with the electronic device 1030.

The capability exchange protocol 1053 is used for exchanging information related to service functions that can be supported by at least one of the electronic device 1010 or the electronic device 1030. For example, the electronic device 1010 and the electronic device 1030 may exchange information on service functions that are currently supported by each electronic device with each other through the capability exchange protocol 1053. The exchangeable information may include identification information indicating a specific service among a plurality of services supported by the electronic device 1010 and the electronic device 1030. For example, the electronic device 1010 may receive identification information for a specific service provided by the electronic device 1030 from the electronic device 1030 through the capability exchange protocol 1053. In this case, the first electronic device 1010 may determine whether the electronic device 1010 can support the specific service, based on the received identification information.

The network protocol 1055 is used for controlling the data flow between electronic devices that are connected with each other for communication, for example, in order to provide interworking services. For example, at least one of the electronic device 1010 or the electronic device 1030 may perform the error control or the data quality control, by using the network protocol 1055. Alternatively or additionally, the network protocol 1055 may determine the transmission format of data transmitted and received between the electronic device 1010 and the electronic device 1030. In addition, at least one of the electronic device 1010 or the electronic device 1030 may manage a session for the data exchange between them, e.g., a session connection or a session termination, by using the network protocol 1055.

The application protocol 1057 provides a procedure or information to exchange data related to services which are provided to the external devices. For example, the electronic device 1010 may provide services to the electronic device 1030 through the application protocol 1057.

The communication protocol 1000 may include standard communication protocols, communication protocols designated by individuals or groups (e.g., communication protocols designated by communication device manufacturers or network providers), or a combination thereof.

Herein, the term "module" may refer to, for example, a unit including at least one combination of hardware, software, and firmware. The term "module" may be interchangeably used with other terms, such as unit, logic, logical block, component, and/or circuit. A module may be a minimum unit of an integrally configured article and/or a part thereof. A module may be a minimum unit performing at least one function and/or a part thereof. A module may be mechanically and/or electronically implemented. For example, a module according to the present invention may include at least one of an Application-Specific ICt (ASIC) chip, a Field-Programmable Gate Arrays (FPGA), and a programmable-logic device for performing operations.

At least some of the devices (for example, modules or functions thereof) or the method (for example, operations) according to the above-described embodiments of the present invention may be implemented by a command stored in a computer-readable storage medium in a programming module form. When the instructions are executed by at least one processor (e.g., the processor 910), the at least one processor may perform functions corresponding to the instructions. The computer-readable storage medium may be, for example, the memory 920. At least a part of the programming module may be implemented (for example, executed) by, for example, the processor 910. At least some of the programming modules may include, for example, a module, a program, a routine, a set of instructions or a process for performing one or more functions, etc.

The computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, programming module), such as a Read Only Memory (ROM), a Random Access Memory (RAM), a flash memory, etc. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

While the present invention has been particularly shown and described with reference to certain embodiments thereof, it will be understood by those of ordinary skill in the art that various changes in form and details may be made therein without departing from the spirit and scope of the present invention as defined by the following claims and their equivalents..

**Claims**

1.  A method of correcting color in an electronic device, the method comprising:

    recognizing a selection from a user of a color;
    determining an operation mode of a projector that is projecting an image onto a screen, based on the selected color;
    determining a current value for driving a light source of the projector, based on the determined operation mode; and
    controlling the projector to apply a current corresponding to the determined current value to the light source.

2.  The method of claim 1, wherein the light source includes a red Light Emitting Diode (LED), a green LED, and a blue LED, and
    wherein the determining the operation mode comprises determining an operation time of each of the LEDs.

3.  The method of claim 1, further comprising determining whether the determined current value is within a range of predetermined current values,
    wherein the controlling the projector comprises:

    if the determined current value is within the range of predetermined current values, controlling the projector to apply the current corresponding to the determined current value to the light source; and
    if the determined current value is not within the range of predetermined current values, correcting the determined current value, and controlling the projector to apply a current corresponding to the corrected current value to the light source.

4.  The method of claim 3, wherein the correcting the determined current value comprises:

    if the determined current value is less than a lower limit of the range of predetermined current values, correcting the determined current value into the lower limit; and
    if the determined current value is greater than an upper limit of the range of predetermined current values, correcting the determined current value into the upper limit.

5.  The method of claim 1, further comprising:

    displaying user interface information including color information and a color box on a display of the electronic device; and
    controlling the projector to project the user interface information onto the screen,
    wherein recognizing the selection comprises recognizing that the user selects an item from the color information.

6.  A method for correcting color in an electronic device, the method comprising:

    activating a projector and a camera;
    receiving an image from the camera;
    calculating a sensitivity of the image;
    calculating a current value for driving a light source of the projector, based on the calculated sensitivity; and
    controlling the projector to apply a current corresponding to the calculated current value to the light source.

**7.** The method of claim 6, wherein the receiving the image comprises:

receiving a first image from the camera while a red light is emitted from the projector;
receiving a second image from the camera while a green light is emitted from the projector; and
receiving a third image from the camera while a blue light is emitted from the projector, and
wherein the calculating of the sensitivity of the image comprises:

calculating a red sensitivity by using the first image;
calculating a green sensitivity by using the second image; and
calculating a blue sensitivity by using the third image.

**8.** The method of claim 6, further comprising determining whether the calculated current value is within a range of predetermined current values, and
wherein controlling the projector comprises:

if the calculated current value is within the range of predetermined current values, controlling the projector to apply a current corresponding to the calculated current value to the light source; and
if the calculated current value is not within the range of predetermined current values, correcting the calculated current value, and controlling the projector to apply a current corresponding to the corrected current value to the light source.

**9.** The method of claim 8, wherein correcting the calculated current value comprises:

if the calculated current value is less than a lower limit of the range of predetermined current values, determining whether an output power of the light source exceeds a predetermined limit when a current according to the lower limit is applied to the light source;
if the output power of the light source does not exceed the predetermined limit, correcting the calculated current value into the lower limit;
if the output power of the light source exceeds the predetermined limit, correcting the calculated current value to be less than the lower limit; and
if the calculated current value is greater than an upper limit of the range of predetermined current values, correcting the calculated current value into the upper limit.

**10.** The method of claim 6, further comprising:

determining an operation mode of the projector; and
correcting the calculated current value, based on the determined operation mode,
wherein the controlling the projector comprises controlling the projector to apply a current corresponding to the corrected current value to the light source.

**11.** The method of claim 10, wherein the light source includes a red Light Emitting Diode (LED), a green LED, and a blue LED, and
wherein determining the operation mode comprises determining an operation time of each of the LEDs.

**12.** The method of claim 10, wherein determining the operation mode comprises:

operating the projector according to a multitude of predetermined operation modes in sequence; and
determining one of the multitude of operation modes to be the operation mode for the projector, based on images obtained from the camera in each operation mode.

**13.** An electronic device comprising:

an input device;
a projector for projecting an image onto a screen; and
a processor for executing a projecting management module for recognizing a selection of a user of a color, determining an operation mode of the projector, based on the selected color, determining a current value for driving a light source of the projector, based on the determined operation mode, and controlling the projector to apply a current corresponding to the determined current value to the light source.

**14.** The electronic device of claim 13, further comprising a display for displaying the image, and wherein the projector is configured for projecting the image displayed on the display onto the screen.

**15.** The electronic device of claim 13, wherein the light source includes a red Light Emitting Diode (LED), a green LED, and a blue LED, and
wherein the determining the operation mode comprises determining an operation time of each of the LEDs.

**16.** The electronic device of claim 13, wherein the projecting management module is configured to determine whether the determined current value is within a range of predetermined current values, and
wherein the controlling the projector comprises:

if the determined current value is within the range of predetermined current values, controlling the projector to apply a current corresponding to the determined current value to the light source; and
if the determined current value is not within the range of predetermined current values, correcting the determined current value, and controlling the projector to apply a current corresponding to the corrected current value to the light source.

**17.** The electronic device of claim 16, wherein the correcting the determined current value comprises:

if the determined current value is less than a lower limit of the range of predetermined current values, correcting the determined current value into the lower limit; and
if the determined current value is greater than an upper limit of the range of predetermined current values, correcting the determined current value into the upper limit.

**18.** The electronic device of claim 14, wherein the projecting management module is configured to display user interface information including color information and a color box through the display, and control the projector to project the user interface information onto the screen, and
wherein the recognizing the selection comprises recognizing that the user selects an item from the color information.

**19.** An electronic device comprising:

a camera;
a projector for projecting an image onto a screen;
a processor for executing a projecting management module for activating the projector and the camera, receiving an image from the camera, calculating a sensitivity of the image, calculating a current value for driving a light source of the projector, based on the calculated sensitivity, and controlling the projector to apply a current corresponding to the calculated current value to the light source.

**20.** The electronic device of claim 19, further comprising a display for displaying the image, and wherein the projector is configured for projecting the image displayed on the display onto the screen.

**21.** The electronic device of claim 19, wherein the receiving the image comprises receiving a first image from the camera while a red light is emitted from the projector, receiving a second image from the camera while a green light is emitted from the projector, and receiving a third image from the camera while a blue light is emitted from the projector, and
wherein the calculating the sensitivity comprises calculating a red sensitivity by using the first image, calculating a green sensitivity by using the second image, and calculating a blue sensitivity by using the third image.

EP 2 942 947 A2

FIG. 1

FIG. 2

170

PROJECTING MANAGEMENT MODULE

OBTAINING MODULE — 210

DETERMINING MODULE — 220

CONTROL MODULE — 230

FIG. 3

```
                    ┌─────────────┐
                    │    START    │
                    └──────┬──────┘
                           │
                    ┌──────▼───────────┐
                    │ ACTIVATE PROJECTOR│──310
                    └──────┬───────────┘
                           │
                    ┌──────▼───────────┐
                    │  ACTIVATE CAMERA  │──320
                    └──────┬───────────┘
                           │
                    ┌──────▼───────────────────┐
                    │ CONFIGURE WHITE BALANCE   │──330
                    │        OF CAMERA          │
                    └──────┬───────────────────┘
                           │
                    ┌──────▼───────────────────┐
                    │  CONFIGURE DRIVING CURRENT│──340
                    │       OF LIGHT SOURCE     │
                    └──────┬───────────────────┘
                           │
                    ┌──────▼───────────────────┐
                    │ CONFIGURE PARAMETERS OF   │──350
                    │        CAMERA             │
                    └──────┬───────────────────┘
                           │
                    ┌──────▼───────────────────┐
                    │ CALCULATE SENSITIVITY OF  │──360
                    │     CAPTURED IMAGE        │
                    └──────┬───────────────────┘
                           │
                    ┌──────▼────────────────────────┐
                    │ CALCULATE CURRENT VALUE FOR    │──370
                    │ OBTAINING DESIRED COLOR,       │
                    │ BASED ON SENSITIVITY           │
                    └──────┬────────────────────────┘
```

380 BOUNDARY CONDITIONS ARE MET?

NO → 385 CORRECT CURRENT VALUE

YES

DRIVE LIGHT SOURCE BASED ON CALCULATED OR CORRECTED CURRENT VALUE ──390

END

FIG. 4

```
                    ┌──────────────┐
                    │    START     │
                    └──────────────┘
                           │
                           ▼
    ┌──────────────────────────────────────────┐
    │ OBTAIN CURRENT VALUE FOR DRIVING LIGHT SOURCE │ ～410
    └──────────────────────────────────────────┘
                           │
                           ▼
    ┌──────────────────────────────────────────┐
    │      DETERMINE DUTY MODE OF R G B          │ ～420
    │      LEDS BASED ON CURRENT VALUE           │
    └──────────────────────────────────────────┘
                           │
                           ▼
    ┌──────────────────────────────────────────┐
    │   CORRECT CURRENT VALUE, BASED ON DUTY MODE │ ～430
    └──────────────────────────────────────────┘
                           │
                           ▼
    ┌──────────────────────────────────────────┐
    │ DRIVE LIGHT SOURCEBASED ON CORRECTED CURRENT VALUE │ ～440
    └──────────────────────────────────────────┘
                           │
                           ▼
                    ┌──────────────┐
                    │     END      │
                    └──────────────┘
```

FIG. 5

```
                    ┌─────────────┐
                    │    START    │
                    └──────┬──────┘
                           │
                           ▼
        ┌──────────────────────────────────────┐
        │         ACTIVATE PROJECTOR           │───511
        └──────────────────┬───────────────────┘
                           │
                           ▼
        ┌──────────────────────────────────────┐
        │          ACTIVATE CAMERA             │───512
        └──────────────────┬───────────────────┘
                           │
                           ▼
        ┌──────────────────────────────────────┐
        │   CONFIGURE WHITE BALANCE OF CAMERA  │───513
        └──────────────────┬───────────────────┘
                           │
                           ▼
        ┌──────────────────────────────────────┐
        │ CONFIGURE DRIVING CURRENT OF LIGHT SOURCE │───514
        └──────────────────┬───────────────────┘
                           │
                           ▼
        ┌──────────────────────────────────────┐
        │     CONFIGURE PARAMETERS OF CAMERA   │───515
        └──────────────────┬───────────────────┘
                           │
                           ▼
        ┌──────────────────────────────────────┐
        │   SCAN ALL AVAILABLE DUTY MODES AND  │
        │     SELECT ONE AND APPLY SELECTED    │───520
        │         DUTY MODE TO PROJECTOR       │
        └──────────────────┬───────────────────┘
                           │
                           ▼
                    ┌─────────────┐
                    │     END     │
                    └─────────────┘
```

FIG. 6

```
                    ( START )
                        │
                        ▼
           ┌─────────────────────────┐
           │    ACTIVATE PROJECTOR    │──── 610
           └─────────────────────────┘
                        │
                        ▼
           ┌─────────────────────────┐
           │     ACTIVATE CAMERA      │──── 615
           └─────────────────────────┘
                        │
                        ▼
           ┌──────────────────────────────┐
           │ CONFIGURE WHITE BALANCE OF CAMERA │──── 620
           └──────────────────────────────┘
                        │
                        ▼
           ┌─────────────────────────┐
           │  CONFIGURE DRIVING CURRENT │──── 625
           │     OF LIGHT SOURCE       │
           └─────────────────────────┘
                        │
                        ▼
           ┌──────────────────────────────┐
           │ CONFIGURE PARAMETERS OF CAMERA │──── 630
           └──────────────────────────────┘
                        │
                        ▼
           ┌─────────────────────────────┐
           │  PROJECT WHITE LIGHT ONTO SCREEN │──── 635
           └─────────────────────────────┘
                        │
                        ▼
           ┌─────────────────────────┐
           │   RECEIVE CAPTURED IMAGE  │──── 640
           └─────────────────────────┘
                        │
                        ▼
 YES              ╱ IMAGE COLOR IS CORRECT? ╲──── 645
 ◄────────────────╲                        ╱
                        │ NO
                        ▼         650
           ┌─────────────────────────┐
           │     SCALE CURRENT VALUE   │
           └─────────────────────────┘
                        │
                        ▼          655
          ╱ CURRENT VALUE MEETS ╲   NO    ┌─────────────────────┐  660
          ╲ BOUNDARY CONDITIONS? ╱──────►│ CORRECT CURRENT VALUE │
                        │ YES             └─────────────────────┘
                        ▼          665
          ╱ POWER MEETS PREDETERMINED ╲ NO ┌─────────────────────┐  670
          ╲      CONDITIONS?          ╱───►│ CORRECT OUTPUT POWER  │
                        │ YES             └─────────────────────┘
                        ▼
           ┌──────────────────────────────────┐
           │ DRIVE LIGHT SOURCE BASED ON CURRENT VALUE │──── 675
           └──────────────────────────────────┘
                        │         680
                        ▼
          ╱ CORRECTION IS COMPLETE? ╲  NO
          ╲                         ╱──────►
                        │ YES
                        ▼
                     ( END )
```

# FIG. 7

700

FIG. 8

```
                    ┌──────────┐
                    │  START   │
                    └────┬─────┘
                         │
          ┌──────────────▼──────────────┐
          │ OUTPUT INFORMATION FOR MANUAL│ ~810
          │    SCREEN COLOR CORRECTION   │
          └──────────────┬──────────────┘
                         │
          ┌──────────────▼──────────────┐
          │   RECOGNIZE SELECTION OF COLOR│ ~820
          └──────────────┬──────────────┘
                         │
          ┌──────────────▼──────────────┐
          │DETERMINE DUTY MODE, BASED ON SELECTED COLOR│ ~830
          └──────────────┬──────────────┘
                         │
          ┌──────────────▼──────────────┐
          │ DETERMINE CURRENT VALUE FOR DRIVING│ ~840
          │   LIGHT SOURCE BASED ON DUTY MODE  │
          └──────────────┬──────────────┘
                         │              850
                    ◇────▼────◇
          ◇  BOUNDARY CONDITIONS ARE MET? ◇──── NO ────┐
                    ◇─────────◇                        │
                         │ YES      860                 │   855
          ┌──────────────▼──────────────┐   ┌───────────▼──────────────┐
          │ DRIVE LIGHT SOURCEBASED ON CORRECTED│   │   CORRECT CURRENT VALUE  │
          │   OR DETERMINED CURRENT VALUE       │   └───────────┬──────────────┘
          └──────────────┬──────────────┘               │
                         │◄──────────────────────────────┘
                    ┌────▼─────┐
                    │   END    │
                    └──────────┘
```

# FIG. 9

900

**ELECTRONIC DEVICE (901)**

COMMUNICATION MODULE (920)
- CELLULAR MODULE (921)
- WIFI MODULE (923)
- BT MODULE (925)
- GPS MODULE (927)
- NFC MODULE (928)
- RF MODULE (929)

INPUT DEVICE (950)
- TOUCH PANEL (952)
- PEN SENSOR (954)
- KEY (956)
- ULTRASONIC INPUT DEVICE (958)

DISPLAY (960)
- PANEL (962)
- HOLOGRAM DEVICE (964)
- PROJECTOR (966)

INTERFACE (970)
- HDMI (972)
- USB (974)
- OPTICAL INTERFACE (976)
- D-SUB (978)

SENSOR MODULE (940)
- GESTURE SENSOR — 940A
- GYRO SENSOR — 940B
- ATMOSPHERIC PRESSURE SENSOR — 940C
- MAGNETIC SENSOR — 940D
- ACCELERATION SENSOR — 940E
- GRIP SENSOR — 940F
- PROXIMITY SENSOR — 940G
- RGB SENSOR — 940H
- BIOMETRIC SENSOR — 940I
- TEMPERATURE/ HUMIDITY SENSOR — 940J
- ILLUMINATION SENSOR — 940K
- UV SENSOR — 940M

APPLICATION PROCESSOR (AP) (910)

SIM CARD — 924

MEMORY (930)
- INTERNAL MEMORY (932)
- EXTERNAL MEMORY (934)

AUDIO MODULE (980)
- SPEAKER — 982
- RECEIVER — 984
- EARPHONE — 986
- MICROPHONE — 988

CAMERA MODULE — 991

INDICATOR — 997

MOTOR — 998

POWER MANAGING MODULE (995)

BATTERY (996)

EP 2 942 947 A2

FIG. 10

1010

ELECTRONIC DEVICE

1030

ELECTRONIC DEVICE

1000

DEVICE DISCOVERY PROTOCOL    1051

CAPABILITY EXCHANGE PROTOCOL    1053

NETWORK PROTOCOL    1055

APPLICATION EXCHANGE PROTOCOL    1057